# EUROPÄISCHE PATENTSCHRIFT

(11) **EP 2 216 302 B1**
(45) Veröffentlichungstag und Bekanntmachung des Hinweises auf die Patenterteilung: **31.10.2018**
(21) Anmeldenummer: 10152143.3
(22) Anmeldetag: 29.01.2010
(51) Int. Cl.: C03B 19/04

(54) **Herstellung eines Behälters aus Glas aus der Schmelze**
Production of a glass container from a molten mass
Fabrication d'un récipient en verre à partir de la masse fondue

(30) Priorität: 06.02.2009 DE 102009008689
(43) Veröffentlichungstag der Anmeldung: 11.08.2010
(73) Patentinhaber: Schott AG, 55122 Mainz (DE)
(72) Erfinder: Langsdorf, Andreas, 55218 Ingelheim (DE); Thürk, Jürgen, 9008 St. Gallen (CH); Kunz, Aurel, 9050 Appenzell (CH); Lange, Ulrich, 55122 Mainz (DE); Küster, Joachim, 63490 Erzhausen (DE); Löffelbein, Bernd, 55291 Saulheim (DE); Meinefeld, Marcus, 55271 Stadecken-Elsheim (DE); Rothhaar, Uwe, 67134 Birkenheide (DE); Ohlinger, Axel, 65205 Wiesbaden (DE)
(74) Vertreter: Witte, Weller & Partner Patentanwälte mbB

(56) Entgegenhaltungen:
- US-A- 2 350 052
- US-A- 3 293 024
- US-A- 5 080 705
- US-A1- 2001 055 930
- DATABASE WPI Week 199719 Thomson Scientific, London, GB; AN 1997-209123 XP002718028, -& JP H09 59037 A (NIPPON ELECTRIC GLASS CO) 4. März 1997 (1997-03-04)

## Beschreibung

Die Erfindung betrifft ein Verfahren zum Herstellen eines Behälters aus Glas unmittelbar aus der Schmelze, insbesondere eines Behälters in Form eines an beiden Enden offenen Hohlkörpers für pharmazeutische oder medizinische Anwendungen aus Borosilikatglas, insbesondere in Form eines Spritzenkörpers.

Pharmazeutische Behältnisse werden standardmäßig aus Rohren oder über Blasverfahren direkt aus der Schmelze hergestellt. Aufgrund geringerer Dickenschwankungen können die Behältnisse aus Rohren hierbei dünnwandiger hergestellt und mit einer engen Wanddickentoleranz gefertigt werden. Aufgrund der Wanddickenproblematik werden Spritzenkörper für pharmazeutische oder medizinische Anwendungen ausschließlich aus Rohren hergestellt.

In der GB 572 984 wird zwar vorgeschlagen, eine Spritze mit zumindest eng spezifiziertem Innendurchmesser über Blasen mittels einer Glasbläserpfeife und Aufschrumpfen auf einen Dorn zu formen. Hierbei handelt es sich jedoch um einen kaum industrialisierbaren Prozess, bei dem mehr als 50 % des Glases verlorengehen und verworfen werden müssen.

Aus der DE-A-1 241 057 ist ferner eine Herstellung von Ampullen für pharmazeutische und medizinische Zwecke unmittelbar aus der Glasschmelze bekannt, wobei mittels Glasmacherpfeifen zunächst aus der Glasschmelze unmittelbar die benötigte Glasmenge angesaugt wird und anschließend bei rotierender Pfeife in eine von außen angelegte zweiteilige Form geblasen wird. Die Ampulle wird anschließend durch einen Brenner von der Glasmacherpfeife abgetrennt. Eine andere Art der Erzeugung von Ampullen direkt aus dem Glasbad besteht darin, dass der Schmelzbehälter an seinem Boden eine Öffnung besitzt, durch die das flüssige Glas mittels eines Stößels von oben nach unten hindurchgedrückt wird. Der Glastropfen wird durch eine automatisch arbeitende Schere abgeschnitten, fällt nun in eine trichterförmige Vertiefung und wird dort entweder mittels eines Vakuums oder mittels eines darüber greifenden Ringes festgehalten. Ein automatisch eingeführter Hohldorn bläst dann den Külbel zu einem Hohlkörper auf.

Diese und andere Varianten der Herstellung von Ampullen liefern keine zufriedenstellende Dickentoleranz für die Herstellung von Spritzenkörpern.

Im Stand der Technik hat sich daher zur Herstellung von Spritzenkörpern eine Herstellung aus vorgeformten Glasrohren durchgesetzt.

Die Nachteile dieses Verfahrens liegen in relativ hohen Herstellungskosten, sowie in der Tatsache, dass durch die lokale Wiedererwärmung des Glasrohres bei der Umformung eine Verarmung an bestimmten Komponenten durch Abdampfen auftritt. So weisen aus Glasrohren hergestellte Spritzenkörper in der Regel an verschiedenen Oberflächenbereichen eine Verarmung an Bor und an Natrium auf, soweit die Herstellung aus Borosilikatgläsern erfolgt. Außerdem sind aufgrund von Zwischenverpackung und -transport der Ausgangsrohre zur Umfangsstation zusätzliche Maßnahmen zu treffen, um eine nicht gewünschte Verschmutzung oder Beschädigung der Rohre zu verhindern.

Für die Herstellung von pharmazeutischen oder medizinischen Behältern der hier behandelten Art werden in der Regel sog. "Typ-I-Gläser", auch teilweise als "Neutralgläser" bezeichnet, verwendet. Hierbei handelt es sich um Gläser, in der Regel um Borosilikatgläser, die eine Wasserbeständigkeit der Klasse 1 nach DIN ISO 719 und eine Säurebeständigkeit der Klasse 1 nach DIN 12116 aufweisen.

Aus der US 3,293,924 A ist ein Verfahren zur Herstellung von Behältern aus Glas in Form von an beiden Enden offenen Hohlkörpern bekannt, wonach ein Glastropfen aus einem Speiser portioniert wird, in eine rotierend angetrieben Form eingebracht wird und unter Wirkung der Schleuderkraft ausgeformt wird, wobei die Form mit einer Rotationsgeschwindigkeit von mindestens 10.000 U/min angetrieben wird.

Vor diesem Hintergrund liegt der Erfindung die Aufgabe zugrunde, ein Verfahren zur Herstellung von Behältern aus Borosilikatglas anzugeben, mit einem zylindrischen Bereich, der eine Wandstärke von < 1,5 mm und eine Wanddickentoleranz von maximal ± 0,2 mm aufweist, insbesondere in Form von an beiden Enden offenen Hohlkörpern für pharmazeutische oder medizinische Anwendungen , das insbesondere zur Herstellung von Spritzenkörpern für medizinische oder pharmazeutische Zwecke geeignet ist und das eine Herstellung unmittelbar aus der Glasschmelze ermöglicht, und zwar unter Einhaltung der notwendigen Toleranzen für derartige Behälter.

Diese Aufgabe wird erfindungsgemäß durch ein Verfahren zum Herstellen eines Behälters aus Borosilikatglas, mit einem zylindrischen Bereich, der eine Wandstärke von < 1,5 mm und eine Wanddickentoleranz von maximal ± 0,2 mm aufweist, vorzugsweise in Form eines an beiden Enden offenen Hohlkörpers für pharmazeutische oder medizinische Anwendungen gelöst, bei dem ein Glastropfen aus einem Schmelzaggregat portioniert wird, in eine rotierend angetriebene Form eingebracht wird und unter Wirkung der Schleuderkraft ausgeformt wird, wobei die Form mit einer Rotationsgeschwindigkeit von mindestens 10000 U/min, weiter bevorzugt von mindestens 20000 U/min, weiter bevorzugt von mindestens 30000 U/min, besonders bevorzugt von mindestens 40000 U/min angetrieben wird, wobei der Glastropfen mit einer Temperatur von mindestens 1600°C in die Form zugeführt wird.

Es hat sich gezeigt, dass mit derartig hohen Rotationsgeschwindigkeiten und mit einer derart hohen Temperatur des Glastropfens auch Behälter mit solch kleinen Dimensionen zuverlässig ausgeformt werden können, so dass die geforderten Toleranzen eingehalten werden können.

Bei derart hohen Schleudergeschwindigkeiten ist es aus Gründen der mechanischen Stabilität und der Auswuchtung vorteilhaft, einteilige Schleuderformen zu verwenden. Es hat sich gezeigt, dass bei einer wärmedehnungsangepassten Auslegung dennoch selbst aus einer Form mit sehr geringem Entformungskonus, bzw. einer im Hauptteil rein zylindrischen Form die geformten Glasteile entnommen werden können.

Gemäß einer bevorzugten Weiterbildung der Erfindung wird der Glastropfen mit Vakuumunterstützung in die Form gesaugt.

Diese Maßnahme hat den Vorteil, dass durch eine gezielte Vakuumunterstützung insbesondere in den Bereichen, die durch die Schleuderkraft allein nicht bzw. nicht gleichmäßig genug befüllt werden, eine gezielte Füllung der Form und eine gezielte Wandstärkenverteilung unterstützt werden kann.

Gemäß einer weiteren Ausführungsform wird der Konusbereich gekühlt, um die durch das Vakuum ausgeformte Konusgeometrie im Verlauf des Schleuderprozesses zu stabilisieren.

Gemäß einer weiteren Ausgestaltung des erfindungsgemäßen Verfahrens wird der Glastropfen mit einer Temperatur von mindestens 1700°C, weiter bevorzugt von mindestens 1750°C in die Form zugeführt.

Die Zuführung des Glastropfens mit einer derartig hohen Temperatur in die Form hat zur Folge, dass auch sehr kleine und dünne Behälter mit einer gleichmäßigen Wandstärke hergestellt werden können. Hierbei können die Schleuderdrehzahlen noch in einem relativ geringen Bereich gehalten werden.

Die Viskosität, mit der der Glastropfen in die Form zugeführt wird, beträgt vorzugsweise weniger als 10² dPas.

Mit einer derartig niedrigen Viskosität ergibt sich eine gleichmäßige Verteilung und eine saubere Formfüllung mit geringen Dickentoleranzen.

Vorzugsweise wird der Glastropfen mittels eines scherenlosen Nadelspeisers portioniert.

Diese Maßnahme hat den Vorteil, dass Scherenabdrücke vermieden werden, so dass eine gleichmäßigere Formfüllung erzielt werden kann.

Gemäß einem weiteren Merkmal der Erfindung wird eine einteilige Form benutzt, deren Wandung in einem im Wesentlichen zylindrischen Teil mit weniger als 5 µm auf 1 mm Länge gegenüber der Rotationsachse geneigt ist.

Bevorzugt wird sogar eine Form benutzt, deren Wandung im im Wesentlichen zylindrischen Teil vollständig zylindrisch ausgebildet ist, die Wandung also um 0 µm gegenüber der Rotationsachse geneigt ist.

Während im Stand der Technik in der Regel eine leichte Konizität als notwendig angesehen wird, um eine gute Entformung zu erreichen, hat es sich gezeigt, dass eine ausreichend sichere Entformung sogar mit einer sehr geringen Konizität oder einer Konizität von null möglich ist.

Gemäß einem weiteren Merkmal der Erfindung wird zwischen Glas und Form kein Schmiermittel eingebracht.

Diese Maßnahme trägt dazu bei, die Gefahr einer Kontamination zu verringern. Außerdem ergibt sich eine höhere Formgenauigkeit.

Vorzugsweise wird der Glastropfen in die bereits mit voller Drehzahl rotierende rotierende Form eingebracht.

Dies hat den Vorteil, dass auch bei sehr kleinen Tropfen das Glas noch im ausreichend flüssigen Zustand in die Form gelangt, um eine gleichmäßige Ausformung während des Schleuderprozesses zu ermöglichen.

Der Behälter kann grundsätzlich mit den verschiedensten gewünschten Formen hergestellt werden, weist jedoch in einer bevorzugten Ausgestaltung einen nach außen offenen Flansch an einem Ende und einen sog. Konus an seinem anderen Ende auf.

Im Rahmen dieser Anmeldung wird unter "Konus" ein Bereich verstanden, der einen geringeren Durchmesser als der mittlere, zylindrisch ausgeführte Abschnitt besitzt. Die Form des Konus ist vom jeweiligen Produkt abhängig. In der Regel verjüngt sich der Konus zu seinem Ende hin, kann dort aber auch Verdickungen aufweisen.

In bevorzugter Weiterbildung dieser Ausführung wird der Behälter mit einem durchgehenden Konuskanal in seinem Konus hergestellt.

Gemäß einem weiteren Merkmal der Erfindung wird der Konus nach der Abkühlung des Behälters an seinem äußeren Ende angeschnitten, um den Konuskanal zu eröffnen.

Auf diese Weise ergibt sich eine einfache Herstellung eines nach außen offenen Konuskanals.

Der einem erfindungsgemäß hergestellten Behälter fällt der Borgehalt des Behälters gegenüber seinem nominellen Wert an allen Oberflächen weniger als 60 %, vorzugsweise weniger als 40 %, besonders bevorzugt weniger als 20 % ab.

Ferner fällt bevorzugt auch der Natriumgehalt des Behälters gegen seinen nominellen Wert an allen Oberflächen weniger als 30 %, vorzugsweise weniger als 20 % ab.

Ein erfindungsgemäß hergestellter Behälter weist wegen der unmittelbaren Herstellung aus der Glasschmelze ohne Zwischenschritte geringe Abdampfverluste der leicht flüchtigen Bestandteile, insbesondere Bor und Natrium, auf.

Es ergibt sich somit eine gleichbleibendere und höhere Qualität als bei herkömmlichen Behältern, die aus vorgeformten Rohren hergestellt werden.

Der erfindungsgemäße hergestellte Behälter weist vorzugsweise an seinem einen Ende einen Konus mit einem geringeren Durchmesser als der Durchmesser des mittleren, zylindrischen Bereiches auf.

Der erfindungsgemäße hergestellte Behälter kann auch in sehr kleinen Abmessungen hergestellt werden, er kann also eine gesamte Glasmasse von höchstens 15 g, insbesondere von höchstens 10 g, weiter von höchstens 5 g aufweisen.

In entsprechender Weise kann das Volumen sehr klein sein, nämlich höchstens 15 ml betragen, insbesondere höchstens 10 ml oder höchstens 5 ml betragen.

Schließlich kann der erfindungsgemäß hergestellte Behälter eine Gesamthöhe und einen Gesamtdurchmesser aufweisen, wobei die Gesamthöhe mindestens das 1,5-fache des Gesamtdurchmessers beträgt.

Schließlich lässt sich der erfindungsgemäße Behälter mit einer sehr geringen Wandstärke herstellen, die im zylindrischen Bereich kleiner als 1,3 mm ist, oder sogar kleiner als 1,1 mm ist.

Dabei beträgt dennoch die Wanddickentoleranz maximal ± 0,2 mm, bevorzugt ± 0,1 mm.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:

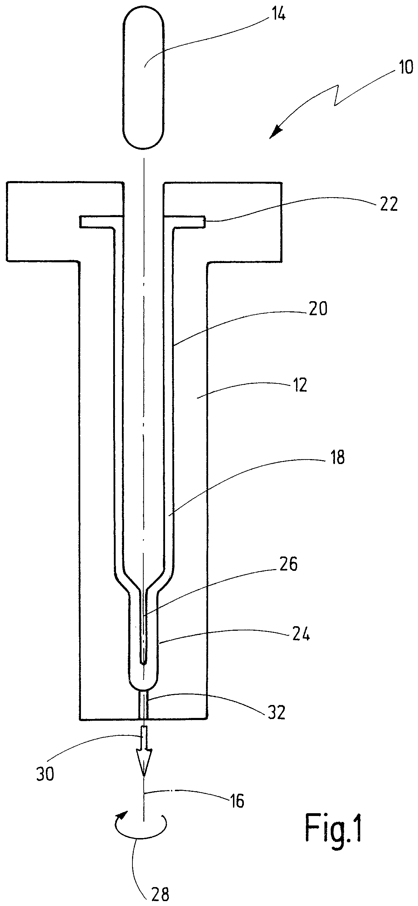

Die einzige Fig. 1 zeigt eine vereinfachte Darstellung einer Vorrichtung zur Ausführung des erfindungsgemäßen Verfahrens.

In Fig. 1 ist eine Schleudervorrichtung insbesondere mit Ziffer 10 bezeichnet.

Die Vorrichtung 10 weist eine Form 12 auf, in der eine Vertiefung 18 vorgesehen ist, die der Negativform des herzustellenden Behälters entspricht.

Die Form 12 ist mit einer sehr hohen Rotationsgeschwindigkeit antreibbar und kann bis zu mindestens 50000 U/min, bevorzugt jedoch bis 80000 U/min, oder sogar bis 100000 U/min angetrieben werden.

Aus einem Schmelzaggregat wird ein Glastropfen 14 vorzugsweise mittels eines scherenlosen Nadelspeisers mit der gewünschten Masse portioniert und fällt gemäß Fig. 1 unmittelbar in die Form 12.

Hierzu wird der Glastropfen 14 in einer sehr niedrigen Viskosität bevorzugt mit weniger als 10³ dPas, vorzugsweise weniger als 10² dPas zugeführt. Bei der Verwendung eines Borosilikatglases, vorzugsweise eines Typ-I-Glases, wird der Glastropfen hierbei mit einer Temperatur von mindestens 1600°C, vorzugsweise von mindestens 1700°C, weiter bevorzugt von mindestens 1750°C in die Form zugeführt.

### Beispiel

Es wird ein Spritzenkörper mit einem Normvolumen von 1 ml, einem Spritzendurchmesser von 8,15 mm und einer Länge von 64 mm und einer Wandstärke von 0,9 mm im zylindrischen Bereich mit angeformtem Konus mit Konuskanal und Flansch am gegenüberliegenden Ende aus dem Typ-I-Glas Fiolax® herbestellt.

Ein Typ-I-Glas oder auch Neutralglas ist ein Glas mit einer Wasserbeständigkeit der Klasse 1 nach DIN ISO 719 und einer Säurebeständigkeit von 1 nach DIN 12116.

Bei dem Glas Fiolax® handelt es sich um ein von der Anmelderin hergestelltes und vertriebenes Borosilikatglas, das insbesondere für pharmazeutische Anwendungen eingesetzt wird. Die charakteristischen Daten von Fiolax sind in Tab. 1 zusammengefasst.

Bei der Zuführung in die Form 12 weist das Glas eine Viskosität zwischen 10² und 10³ dPas auf. Die Temperatur der Form 12 liegt knapp unterhalb der Klebetemperatur, das heißt, einer Temperatur, die kleiner ist als die Temperatur bei einer Viskosität von 10¹⁰ dPas.

Die Ausbildung des Konus 24 und des Konuskanals 26 wird hierbei gezielt durch Anlegen eines Vakuums über einen Kanal 32 an den Konus 24 unterstützt, wie auch mit dem Pfeil 30 in Fig. 1 angedeutet ist. Das Vakuum ist hierbei möglichst hoch und kann z.B. etwa -0,9 bar betragen.

**Tab. 1**

| Daten von FIOLAX® | | | | | |
|---|---|---|---|---|---|
| Chemische Zusammensetzung (Hauptbestandteile in Gew.-%) | | | | | |
| SiO₂ | B₂O₃ | Al₂O₃ | Na₂O | CaO | |
| 75 | 10,5 | 5 | 7 | 1,5 | |

| Wasserbeständigkeit | | | | | |
|---|---|---|---|---|---|
| nach DIN ISO 719 | | | Klasse HGB 1 | | |

| Säurebeständigkeit | | | | | |
|---|---|---|---|---|---|
| nach DIN 12116 | | | Klasse S1 | | |

| Thermischer Ausdehnungskoeffizient | | | | | |
|---|---|---|---|---|---|
| α (20 °C) | | | 4,9 ·10⁻⁶/K | | |
| Transformationstemperatur T_{g} | | | 565 °C | | |

| Temperatur des Glases bei den Viskositäten η (in dPa·s) | | | | | |
|---|---|---|---|---|---|
| 10¹³ (Obere Kühltemperatur) | | | 565 °C | | |
| 10^{7,6} (Erweichungstemperatur) | | | 785 °C | | |
| 10⁴ (Verarbeitungstemperatur) | | | 1165 °C | | |
| Dichte bei 25 °C | | | 2.340 kg/m³ | | |

Die Schleuderform ist im Konusbereich zusätzlich gekühlt, um eine Stabilisierung des ausgeformten Konus im Schleuderprozess zu gewährleisten.

Der Glastropfen fällt in die bereits mit Nenndrehzahl (50000 U/min) rotierende, einteilige Form. Schon nach etwa 3 Sekunden nimmt der Spritzenkörper die gewünschte Sollform an.

Nach Entnahme aus der Form und Erkalten wird der so hergestellte Spritzenkörper am äußeren Ende des Konus angeschnitten, um den Konuskanal 26 zu eröffnen.

Die Wanddickentoleranz im zylindrischen Bereich 20 liegt innerhalb der geometrischen Spezifikationen und beträgt ± 0,2 mm, bevorzugt < ± 0,1 mm.

## Patentansprüche

1. Verfahren zum Herstellen eines Behälters aus Borosilikatglas mit einem zylindrischen Bereich, der eine Wandstärke von < 1,5 mm und eine Wanddickentoleranz von maximal ± 0,2 mm aufweist, bei dem ein Glastropfen (14) aus einem Speiser portioniert wird, in eine rotierend angetriebene Form (12) eingebracht wird und unter Wirkung der Schleuderkraft ausgeformt wird, wobei die Form (12) mit einer Rotationsgeschwindigkeit von mindestens 10000 U/min, bevorzugt von mindestens 20000 U/min, weiter bevorzugt von mindestens 30000 U/min, besonders bevorzugt von 40000 U/min angetrieben wird, wobei der Glastropfen (14) mit einer Viskosität < 10³ dPas, vorzugsweise < 10² dPas in die Form (12) zugeführt wird, wobei der Glastropfen vorzugsweise in die rotierende Form (12) eingebracht wird, wobei der Glastropfen (14) mit einer Temperatur von mindestens 1600°C in die Form (12) zugeführt wird.

2. Verfahren nach Anspruch 1, bei dem der Behälter als an beiden Enden offener Hohlkörper, insbesondere Spritzenkörper oder Karpule, für pharmazeutische oder medizinische Zwecke ausgebildet ist.

3. Verfahren nach Anspruch 1 oder 2, bei dem der Glastropfen (14) mit Vakuumunterstützung in die Form (12) gesaugt wird.

4. Verfahren nach einem der vorhergehenden Ansprüche, bei dem der Glastropfen (14) mit einer Temperatur von mindestens 1700°C, weiter bevorzugt von mindestens 1750°C in die Form (12) zugeführt wird.

5. Verfahren nach einem der vorhergehenden Ansprüche, bei dem der Behälter mit einem nach außen offenen Flansch (22) am einen Ende und mit einem Konus (24) an seinem anderen Ende hergestellt wird, vorzugsweise mit einem durchgehenden Konuskanal (26) in seinem Konus (24) hergestellt wird.

6. Verfahren nach Anspruch 5, bei dem der Konus (24) nach der Abkühlung des Behälters an seinem äußeren Ende angeschnitten wird, um den Konuskanal (26) zu eröffnen.

7. Verfahren nach einem der vorhergehenden Ansprüche, bei dem eine einteilige Form benutzt wird, deren Wandung in einem im Wesentlichen zylindrischen Teil mit weniger als 5 µm auf 1 mm Länge gegenüber der Rotationsachse geneigt ist.

8. Verfahren nach einem der vorhergehenden Ansprüche, bei dem eine Form (12) benutzt wird, deren Wandung zylindrisch ausgebildet ist.

9. Verfahren nach einem der vorhergehenden Ansprüche, bei dem die Form (12) lokal gekühlt wird.

10. Verfahren nach einem der vorhergehenden Ansprüche, bei dem der hergestellte Behälter an seinem einen Ende einen Flansch (22) und an seinem anderen Ende einen Konusbereich (24) mit einem geringeren Durchmesser als der Durchmesser des mittleren, zylindrischen Bereiches aufweist.

11. Verfahren nach einem der vorhergehenden Ansprüche, bei dem der Behälter mit einer Gesamtglasmasse von höchstens 15 g, insbesondere von höchstens 10 g, insbesondere von höchstens 5 g, hergestellt wird.

12. Verfahren nach einem der vorhergehenden Ansprüche, bei dem der Behälter mit einem Volumen von höchstens 15 ml, insbesondere von höchstens 10 ml, insbesondere von höchstens 5 ml, hergestellt wird.

13. Verfahren nach einem der vorhergehenden Ansprüche, bei dem der Behälter mit einer Gesamthöhe und einem Gesamtdurchmesser hergestellt wird, wobei die Gesamthöhe mindestens das 1,5-fache des Gesamtdurchmessers beträgt.

14. Verfahren nach einem der vorhergehenden Ansprüche, bei dem der Behälter mit einer Wandstärke im zylindrischen Bereich hergestellt wird, die < 1,3 mm, insbesondere < 1,1 mm ist.

## Claims

1. Process for the production of a container made from borosilicate glass with a cylindrical area having a wall thickness of < 1.5 mm and a wall thickness tolerance of maximally ± 0.2 mm, wherein a glass drop (14) is dispensed from a melting unit, is placed into a mold (12) that is driven to rotate, and is formed by the effect of the centrifugal force, the mold (12) being driven at a rotational speed of at least 10000 rpm, preferably at least 20000 rpm, more preferably at least 30000 rpm, most preferably at least 40000 rpm, wherein the glass drop (14) is fed into the mold (12) with a viscosity of < 10³ dPas, preferably < 10² dPas, wherein the glass drop is preferably fed into the rotating mold (12), wherein the glass drop is fed with a temperature of at least 1600 °C into the mold (12).

2. The process according to claim 1, wherein the container is configured as a hollow body that is open on both ends, in particular as a syringe body or a carpoule, for pharmaceutical or medical purposes.

3. The process according to claim 1 or claim 2, wherein the glass drop (14) is drawn into the mold (12) assisted by a vacuum.

4. The process according to any of the preceding claims, wherein the glass drop (14) is fed into the mold (12) with a temperature of at least 1700° C, preferably at least 1750° C.

5. The process according to any of the preceding claims, wherein the container is produced with a flange (22) that is open toward the outside on its one end, and with a cone (24) on its other end, preferably with a full-length cone channel (26) in its cone (24).

6. The process according to claim 5, wherein after cooling down of the container the cone (24) is cut off at its outer end in order to open up the cone channel (26).

7. The process according to any of the preceding claims, wherein an unsplit mold is used whose wall, in a substantially cylindrical portion, is inclined by less than 5 µm per 1 mm of its length relative to the axis of rotation.

8. The process according to any of the preceding claims, wherein a mold (12) is used that has a cylindrical wall.

9. The process according to any of the preceding claims, wherein the mold (12) is cooled locally.

10. The process according to any of the preceding claims, having a flange (22) at its one end and, on its other end, a cone area (24) of smaller diameter, compared with the diameter of the medium cylindrical portion.

11. The process according to any of the preceding claims, wherein the container is made with a total glass mass of maximally 15 g, in particular maximally 10 g, in particular maximally 5 g.

12. The process according to any of the preceding claims, wherein the container is made with a volume of maximally 15 ml, in particular maximally 10 ml, in particular maximally 5 ml.

13. The process according to any of the preceding claims, wherein the container is made with an overall height and an overall diameter, the overall height being equal to at least 1.5 times the value of the overall diameter.

14. The process according to any of the preceding claims, wherein the container is made with a wall thickness in the cylindrical area that is < 1.3 mm, in particular < 1.1 mm.

## Revendications

1. Procédé de fabrication d'un récipient en verre au borosilicate avec une région cylindrique, qui présente une épaisseur de paroi de < 1,5 mm et une tolérance sur l'épaisseur de paroi de ± 0,2 mm au maximum, dans lequel on divise en portions une goutte de verre (14) provenant d'un feeder, on l'introduit dans un moule entraîné en rotation (12) avec une vitesse de rotation d'au moins 10 000 tr/min, de préférence d'au moins 20 000 tr/min, de préférence encore d'au moins 30 000 tr/min, et de préférence enfin d'au moins 40 000 tr/min, dans lequel on envoie la goutte de verre (14) avec une viscosité < 10³ dPas, de préférence < 10² dPas, dans le moule (12), dans lequel on introduit la goutte de verre de préférence dans le moule tournant (12), dans lequel on introduit la goutte de verre (14) avec une température d'au moins 1600°C dans le moule (12).

2. Procédé selon la revendication 1, dans lequel le récipient est réalisé sous la forme d'un corps creux ouvert aux deux extrémités, en particulier un corps de seringue ou une ampoule, pour des applications pharmaceutiques ou médicales.

3. Procédé selon la revendication 1 ou 2, dans lequel on aspire la goutte de verre (14) avec l'appui d'un vide dans le moule (12).

4. Procédé selon l'une quelconque des revendications précédentes, dans lequel on envoie la goutte de verre (14) dans le moule (12) avec une température d'au moins 1700°C, préférence encore d'au moins 1750°C.

5. Procédé selon l'une quelconque des revendications précédentes, dans lequel on fabrique le récipient avec une bride ouverte vers l'extérieur (22) à une extrémité et avec un cône (24) à son autre extrémité, de préférence avec un canal de cône continu (26) dans son cône (24).

6. Procédé selon la revendication 5, dans lequel on tranche le cône (24) à son extrémité extérieure après le refroidissement du récipient, afin d'ouvrir le canal de cône (26).

7. Procédé selon l'une quelconque des revendications précédentes, dans lequel on utilise un moule en une pièce, dont la paroi est inclinée par rapport à l'axe de rotation avec moins de 5 |jm sur 1 mm de longueur dans une partie essentiellement cylindrique.

8. Procédé selon l'une quelconque des revendications précédentes, dans lequel on utilise un moule (12), dont la paroi est cylindrique.

9. Procédé selon l'une quelconque des revendications précédentes, dans lequel on refroidit localement le moule (12).

10. Procédé selon l'une quelconque des revendications précédentes, dans lequel le récipient fabriqué présente à sa première extrémité une bride (22) et à son autre extrémité une zone de cône (24) avec un diamètre inférieur au diamètre de la région cylindrique moyenne.

11. Procédé selon l'une quelconque des revendications précédentes, dans lequel on fabrique le récipient avec une masse de verre totale au maximum de 15 g, en particulier au maximum de 10 g, et de préférence au maximum de 5 g.

12. Procédé selon l'une quelconque des revendications précédentes, dans lequel on fabrique le récipient avec un volume au maximum de 15 ml, en particulier au maximum de 10 ml, et de préférence encore au maximum de 5 ml.

13. Procédé selon l'une quelconque des revendications précédentes, dans lequel on fabrique le récipient avec une hauteur totale et un diamètre total, dans lequel la hauteur totale vaut au moins 1,5 fois le diamètre total.

14. Procédé selon l'une quelconque des revendications précédentes, dans lequel on fabrique le récipient avec une épaisseur de paroi dans la région cylindrique, qui est < 1,3 mm, en particulier < 1,1 mm.
